# EUROPEAN PATENT APPLICATION

(11) **EP 3 597 142 A1**
(43) Date of publication of application: **22.01.2020**
(21) Application number: 19187235.7
(22) Date of filing: 19.07.2019
(51) Int. Cl.: A61C 13/00, A61C 13/271, A61C 13/267

(54) **DENTURE BASE MANUFACTURING METHOD, CUTTING APPARATUS, AND WORKPIECE MATERIAL**

(30) Priority: 20.07.2018 JP 2018136683
(71) Applicant: DGSHAPE Corporation, Hamamatsu-shi, Shizuoka 431-2103 (JP)
(72) Inventor: SAITO, Koji, Hamamatsu-shi, Shizuoka 431-2103 (JP); ISOBE, Sachino, Hamamatsu-shi, Shizuoka 431-2103 (JP); HARADA, Akira, Hamamatsu-shi, Shizuoka 431-2103 (JP)
(74) Representative: Grünecker Patent- und Rechtsanwälte PartG mbB

(57) **Abstract**

A denture base manufacturing method according to an embodiment of the present invention includes an apparatus preparing step, a cutting data creating step, and a cutting step. The apparatus preparing step involves preparing a cutting apparatus including a retainer, a cutter, and a controller. The retainer retains a workpiece material composed mainly of thermoplastic resin. The cutter cuts the workpiece material. The controller is communicably connected to the retainer and the cutter. The cutting data creating step involves creating cutting data in accordance with three-dimensional data indicative of a shape of a denture base including a fitted portion to be fitted to an abutment tooth of a patient. The cutting step involves cutting the workpiece material using the cutting apparatus in accordance with the cutting data.

## Description

### BACKGROUND OF THE INVENTION

### 1. Field of the Invention

The present invention relates to a denture base manufacturing method, a cutting apparatus, and a workpiece material.

### 2. Description of the Related Art

As is known in the related art, techniques for replacing partially missing teeth of patients involve using partial dentures. A typical partial denture covered by health insurance in Japan includes a denture base, an artificial tooth, and a fastener made of metal (hereinafter referred to as a "metal clasp") . The denture base is brought into intimate contact with the alveolar ridge mucosa of a patient. The artificial tooth is secured to the denture base. The metal clasp grasps an abutment tooth (or clasped tooth) of the patient. The metal clasp of such a partial denture, however, is conspicuously lustrous in an oral cavity, making the partial denture aesthetically unpleasant. The use of metal makes it impossible for patients allergic to metal to wear such partial dentures. Because abutment teeth are firmly restrained by the metal clasps, some patients feel discomfort and stop wearing such partial dentures.

To solve such problems, a "non-clasp denture" has recently been developed, although such a non-clasp denture is uncovered by health insurance in Japan. The non-clasp denture is made of highly elastic thermoplastic resin and includes no metal clasp. The non-clasp denture includes, instead of a metal clasp, a fitted portion integral with a denture base. The fitted portion is fitted to an abutment tooth so as to secure the non-clasp denture inside the oral cavity of a patient.

Nowadays, a professional dental technician's workshop fabricates the thermoplastic resin portion of the non-clasp denture (i.e., a portion of the denture base provided with the fitted portion) by following a procedure described below (see, for example, JP 2010 201092 A). First, an intraoral model of a patient is made using dental wax, for example. The model is buried in plaster and then cooled so as to solidify the plaster. The plaster is heated to 1000°C or higher so as to burn off the wax. Thus, a plaster mold is fabricated. Thermoplastic resin in pellet form is fed into a high temperature melting furnace, so that the thermoplastic resin is molten at about 300°C. The thermoplastic resin heated and molten is injected into the plaster mold by an injection molding machine. The thermoplastic resin injected is then cooled and solidified. The plaster mold is divided so as to remove an injection-molded article from the mold. The injection-molded article typically has an excess portion (hereinafter referred to as a "burr") protruding from the injection-molded article. To form the injection-molded article into a desired shape, a dental technician deburrs and/or polishes the injection-molded article after injection molding.

### SUMMARY OF THE INVENTION

As described above, the fabrication of the thermoplastic resin portion of the non-clasp denture requires a complicated procedure and takes 12 to 24 hours to finish the whole procedure. Unfortunately, the fabrication cost increases accordingly. In addition, injection molding induces cure shrinkage when thermoplastic resin changes from a liquid form to a solid form. This makes it necessary for the dental technician to cope with the difficulties of fabricating the plaster mold in consideration of distortion of thermoplastic resin, and deburring and/or polishing the injection-molded article after injection molding. Consequently, such difficulties increase the burden on the dental technician.

Accordingly, embodiments of the present invention provide methods for manufacturing high-precision denture bases with more ease. Embodiments of the present invention also provide cutting apparatuses for use in manufacturing such denture bases, and workpiece materials to be cut by such cutting apparatuses.

A preferred embodiment of the present invention provides a denture base manufacturing method comprising an apparatus preparing step, a cutting data creating step, and a cutting step. The apparatus preparing step involves preparing a cutting apparatus, including a retainer, a cutter, and a controller. The retainer retains a workpiece material composed mainly of thermoplastic resin. The cutter cuts the workpiece material. The controller is communicably connected to the retainer and the cutter. The cutting data creating step involves creating cutting data in accordance with three-dimensional data indicative of a shape of a denture base including a fitted portion to be fitted to an abutment tooth of a patient. The cutting step involves cutting the workpiece material using the cutting apparatus in accordance with the cutting data.

The manufacturing method involves cutting the workpiece material using the cutting apparatus so as to fabricate the denture base including the fitted portion. Accordingly, the time required for the fabrication of the denture base is considerably shorter than when the denture base is fabricated by a method known in the art. This results in not only a reduction in fabrication cost but also a reduction in the burden on a dental technician. During the cutting step, the thermoplastic resin remains in a solid state, so that a change of state from a liquid to a solid does not occur. Distortion of the thermoplastic resin is thus relatively smaller than when the denture base is fabricated by a method known in the art. Consequently, the manufacturing method facilitates manufacture of the denture base of high precision.

Another preferred embodiment of the present invention provides a cutting apparatus comprising a retainer, a cutter, and a controller. The retainer retains a workpiece material composed mainly of thermoplastic resin. The cutter cuts the workpiece material. The controller is communicably connected to the retainer and the cutter. The controller includes a cutting data creator and a cutting controller. The cutting data creator creates cutting data in accordance with three-dimensional data indicative of a shape of a denture base including a fitted portion to be fitted to an abutment tooth of a patient. The cutting controller cuts the workpiece material in accordance with the cutting data. The cutting apparatus facilitates manufacture of the denture base including the fitted portion.

Still another preferred embodiment of the present invention provides a workpiece material composed mainly of thermoplastic resin. The workpiece material is to be cut into a denture base by a cutting apparatus. The denture base includes a fitted portion to be fitted to an abutment tooth of a patient.

Various embodiments of the present invention facilitate fabrication of denture bases of high precision.

### BRIEF DESCRIPTION OF THE DRAWINGS

FIG. 1 is a plan view of an exemplary partial denture.
FIG. 2 is a plan view of a denture base of the partial denture illustrated in FIG. 1.
FIG. 3 is a flow chart illustrating a partial denture manufacturing method according to an embodiment of the present invention.
FIG. 4 is a perspective view of an exemplary workpiece material.
FIG. 5 is a perspective view of a cutting apparatus.
FIG. 6 is a front view of the cutting apparatus, with its cover opened.
FIG. 7 is a perspective view of a tool magazine, a rotative support, and a clamp.
FIG. 8 is a block diagram of the cutting apparatus.
FIG. 9 is a plan view of a partial denture according to another embodiment of the present invention.
FIG. 10 is a plan view of a partial denture according to still another embodiment of the present invention.
FIG. 11 is a plan view of another exemplary workpiece material.
FIG. 12 is a plan view of an exemplary adapter.

### DETAILED DESCRIPTION OF THE PREFERRED EMBODIMENTS

First, an exemplary partial denture will be described with reference to the drawings, and then partial denture manufacturing methods, cutting apparatuses, and workpiece materials according to embodiments of the present invention will be described below with reference to the drawings. The embodiments described below are naturally not intended to limit the present invention in any way. Components or elements having the same functions are identified by the same reference signs, and description thereof will be simplified or omitted when deemed redundant.

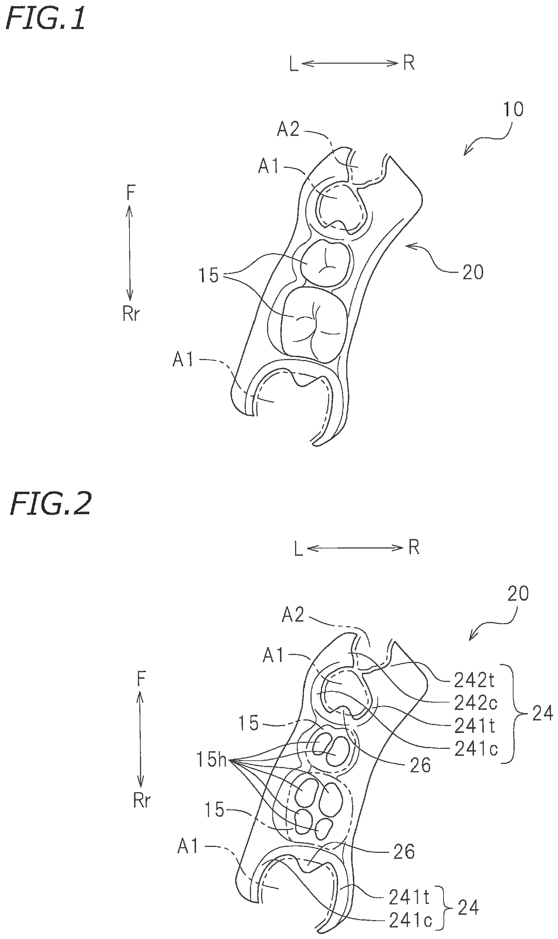

FIG. 1 is a plan view of an exemplary partial denture 10. The partial denture 10 is used to replace partially missing teeth of a patient. The partial denture 10 is used for a patient having one or more remaining teeth (e.g., abutment teeth A1 and A2). As used herein, the term "partial denture" may refer to any of various dentures other than complete dentures (which may also be referred to as "full sets of false teeth" or "full dentures"). In the following description of partial dentures, the reference signs F, Rr, R, and L in the drawings respectively represent front, rear, right, and left in the oral cavity of each patient. These directions are defined merely for the sake of convenience and do not limit in any way how the present invention may be practiced.

The partial denture 10 is used for a patient having a few or several missing teeth. Specifically, the partial denture 10 is used for a patient having two missing teeth in a row between the two abutment teeth A1. The abutment teeth A1 are the teeth of the patient. In the plan view, the partial denture 10 has an approximate I-shape extending forward to the right from a left rear location in FIG. 1. The partial denture 10 includes a denture base 20 and artificial teeth 15. The denture base 20 is fabricated by cutting a workpiece material 2 (which will be described below) . The artificial teeth 15 are secured to the denture base 20. The denture base 20 is physically integral with the artificial teeth 15. The partial denture 10 includes no metal clasp. The partial denture 10 typically includes no metal component whatsoever.

FIG. 2 is a plan view of the denture base 20, with the artificial teeth 15 removed from the partial denture 10 illustrated in FIG. 1. The principal component of the denture base 20 is thermoplastic resin for partial denture fabrication. As use herein, the term "principal component" refers to a main component that is higher in mass percentage than other components. Suppose that the total mass percentage of the denture base 20 is 100 percent. In this case, the denture base 20 generally contains 50 mass percent or more of thermoplastic resin, or typically contains 80 mass percent or more of thermoplastic resin. In one example, the denture base 20 may contain 90 mass percent or more of thermoplastic resin. In another example, the denture base 20 may contain 95 mass percent or more of thermoplastic resin.

The denture base 20 covers at least the alveolar ridge mucosa of a missing tooth region and comes into intimate contact with the alveolar ridge mucosa. The denture base 20 according to the present embodiment includes a plurality of recessed grooves 15h, a plurality of fitted portions 24, and a plurality of protrusions 26. The artificial teeth 15 are disposed in the recessed grooves 15h. The fitted portions 24 are each provided in the form of a clasp. The protrusions 26 are each provided in the form of a rest. The recessed grooves 15h are portions of the denture base 20 into which ends of the artificial teeth 15 are fitted. Each recessed groove 15h is an example of a "securer". The recessed grooves 15h may serve as marks indicating the locations and/or orientations of the artificial teeth 15 when the artificial teeth 15 are disposed in the recessed grooves 15h. Because the recessed grooves 15h are not essential, the denture base 20 may include no recessed grooves 15h in other embodiments. The fitted portions 24 each extend continuously in a direction away from the recessed grooves 15h. The fitted portions 24 and the protrusions 26 are seamlessly integral with the denture base 20. Because the denture base 20 includes the fitted portions 24 and the protrusions 26, the denture base 20 combines the following three functions: the function of withstanding occlusal pressure (hereinafter referred to as a "supporting function") ; the function of withstanding a horizontal force applied to the artificial teeth 15 (hereinafter referred to as a "gripping function"); and the function of withstanding a separating force (hereinafter referred to as a "maintaining function").

The fitted portions 24 are fitted to the remaining teeth of the patient. The fitted portions 24 serve mainly to enhance the gripping function and the maintaining function. The fitted portions 24 each extend along the outer edge(s) of associated one(s) of the abutment teeth A1 and A2 (e.g., along the neck(s) of associated one(s) of the abutment teeth A1 and A2) from a portion of the denture base 20 adjacent to the recessed grooves 15h. In the plan view, the fitted portions 24 each cover one-half or more than one-half of the lateral portion(s) of associated one (s) of the abutment teeth A1 and A2. In one example, the fitted portions 24 each cover substantially the entire lateral portion(s) of associated one(s) of the abutment teeth A1 and A2. One of the fitted portions 24 is disposed forward of the recessed grooves 15h (or the artificial teeth 15), and the other fitted portion 24 is disposed rearward of the recessed grooves 15h (or the artificial teeth 15), such that the recessed grooves 15h (or the artificial teeth 15) are located between the front and rear fitted portions 24. The front fitted portion 24 extends forward to the right and left along the associated abutment teeth A1 and A2. The rear fitted portion 24 extends rearward to the right and left along the associated abutment tooth A1. Each of the front and rear fitted portions 24 includes fitted regions 241t and 241c to be fitted to the associated abutment tooth A1 adjacent to the recessed grooves 15h. The front fitted portion 24 further includes fitted regions 242t and 242c to be fitted to the abutment tooth A2 adjacent to the associated abutment tooth A1. The fitted region 241c of each of the front and rear fitted portions 24 is the cheek-side fitted region 241c that extends along the cheek-side portion of the associated abutment tooth A1 (i.e., the left-side portion of the associated abutment tooth A1 in FIG. 2). The fitted region 242c of the front fitted portion 24 is the cheek-side fitted region 242c that extends along the cheek-side portion of the abutment tooth A2 (i.e., the left-side portion of the abutment tooth A2 in FIG. 2). The fitted region 241t of each of the front and rear fitted portions 24 is the tongue-side fitted region 241t that extends along the tongue-side portion of the associated abutment tooth A1 (i.e., the right-side portion of the associated abutment tooth A1 in FIG. 2). The fitted region 242t of the front fitted portion 24 is the tongue-side fitted region 242t that extends along the tongue-side portion of the abutment tooth A2 (i.e., the right-side portion of the abutment tooth A2 in FIG. 2) .

The protrusions 26 are placed on the two abutment teeth A1. The protrusions 26 serve mainly to enhance the supporting function of the denture base 20. One of the protrusions 26 is disposed forward of the recessed grooves 15h (or the artificial teeth 15), and the other protrusion 26 is disposed rearward of the recessed grooves 15h (or the artificial teeth 15), such that the recessed grooves 15h (or the artificial teeth 15) are located between the front and rear protrusions 26. The protrusions 26 are each disposed on the crown of an associated one of the two abutment teeth A1. The protrusions 26 each press the associated one of the two abutment teeth A1 from above. The protrusions 26 each cover a portion of the occlusal surface of the associated one of the two abutment teeth A1. The protrusions 26 preclude the denture base 20 from sinking toward the alveolar ridge. The protrusions 26, however, are not essential. The denture base 20 may include at least one protrusion 26 or may include no protrusions 26 in other embodiments.

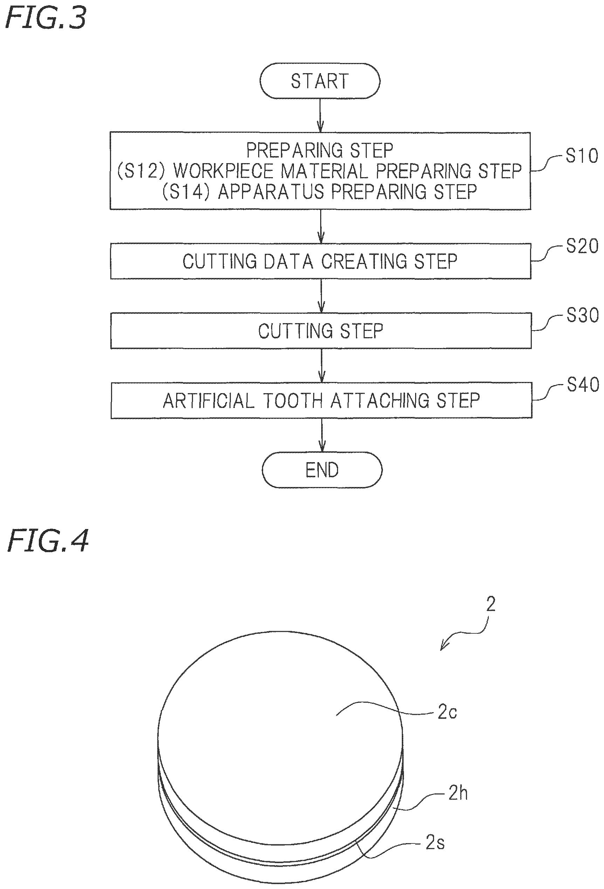

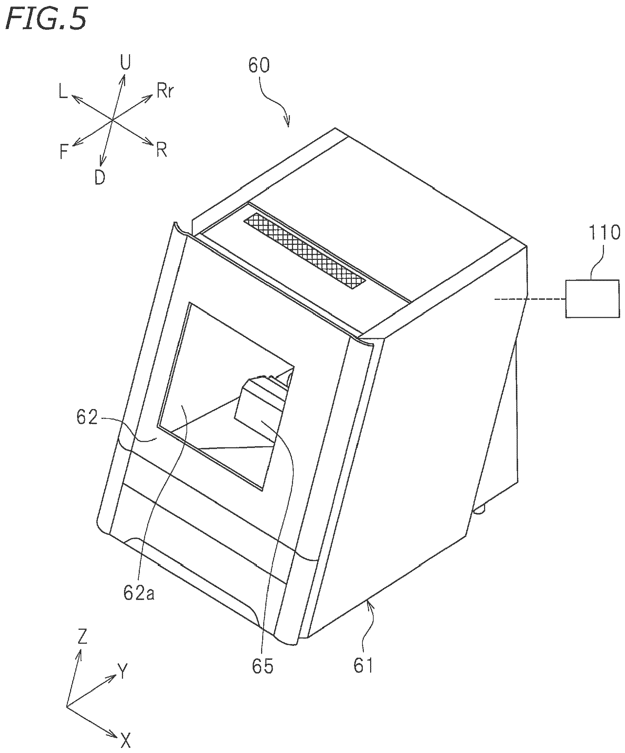

FIG. 3 is a flow chart illustrating a method for manufacturing the partial denture 10. The manufacturing method according to the present embodiment includes the process of fabricating the denture base 20 by cutting the workpiece material 2 for dental use (see FIG. 4) into a desired shape using a cutting apparatus 60 (see FIG. 5). The manufacturing method according to the present embodiment includes a preparing step S10, a cutting data creating step S20, a cutting step S30, and an artificial tooth attaching step S40. The preparing step S10 includes a workpiece material preparing step S12 and an apparatus preparing step S14. The workpiece material preparing step S12 involves preparing the workpiece material 2. The apparatus preparing step S14 involves preparing the cutting apparatus 60. The preparing step S10, the cutting data creating step S20, and the cutting step S30 may be regarded as a method for manufacturing the denture base 20. The steps of the method for manufacturing the partial denture 10 will be described in detail below.

First, the workpiece material preparing step S12 involves preparing the workpiece material 2 for dental use. The workpiece material 2 is a raw material for the denture base 20. The workpiece material 2 is cut into the denture base 20 by the cutting apparatus 60. The principal component of the workpiece material 2 is thermoplastic resin usable for partial denture fabrication (i.e., thermoplastic resin for partial dentures). Examples of the workpiece material 2 may include autopolymer resin polymerized at room temperatures, and heat-curing resin polymerized by application of heat. Suppose that the total mass percentage of the workpiece material 2 is 100 percent. In this case, the workpiece material 2 generally contains 50 mass percent or more of thermoplastic resin for partial dentures, or typically contains 80 mass percent or more of thermoplastic resin for partial dentures. In one example, the workpiece material 2 may contain 90 mass percent or more of thermoplastic resin for partial dentures . In another example, the workpiece material 2 may contain 95 mass percent or more of thermoplastic resin for partial dentures. When necessary, the workpiece material 2 may contain component (s) other than thermoplastic resin for partial dentures. In one example, the workpiece material 2 may contain additive(s), such as a stabilizer, a plasticizer, a lubricant, a surfactant, and/or an ultraviolet light absorber.

In many cases, the melting point of thermoplastic resin for partial dentures is higher than the melting point of thermoplastic resin for complete dentures, such as polymethyl methacrylate (PMMA) resin. In one example, thermoplastic resin for partial dentures may have a melting point of 200°C or more, 250°C or more, or 300°C or more. Thermoplastic resin for partial dentures is relatively more elastic than thermoplastic resin for complete dentures, such as polymethyl methacrylate resin. In one example, thermoplastic resin for partial dentures may have a Young's modulus of 200 kgf/mm² or less. The density of thermoplastic resin for partial dentures may be relatively lower than the density of thermoplastic resin for complete dentures, such as polymethyl methacrylate resin. In one example, thermoplastic resin for partial dentures may have a density of 1.1 g/cm³ or less or 1.05 g/cm³ or less.

Known examples of thermoplastic resin for partial dentures include polyamide resin (nylon type), polycarbonate resin, and polyester resin. Examples of polyamide resin include nylon type polyamide resin known as "super-polyamide resin". Polyamide resin is more elastic and flexible than other types of resin. The use of polyamide resin enables manufacture of the denture base 20 that is more unlikely to fracture. Polyamide resin is lighter than other types of resin. The use of polyamide resin not only enables patients to wear and use the resulting partial dentures more comfortably but also reduces the loads on the alveolar ridge mucosae of the patients. Polycarbonate resin is mechanically stronger and more shock and heat resistant than other types of resin. The use of polycarbonate resin enables manufacture of the denture base 20 higher in strength.

Examples of commercially available polyamide resin for partial dentures include Valplast®, Flexite™, FlexStar V™, Lucitone FRS, Bioplast™, and Biotone™. Examples of polycarbonate resin for partial dentures include Jet Carbo Resin™, Jet Carbo-S™, Reigning Resin N™, and polycarbonate resin RQ™. Examples of polyester resin for partial dentures include EstheShot® and EstheShot Bright™.

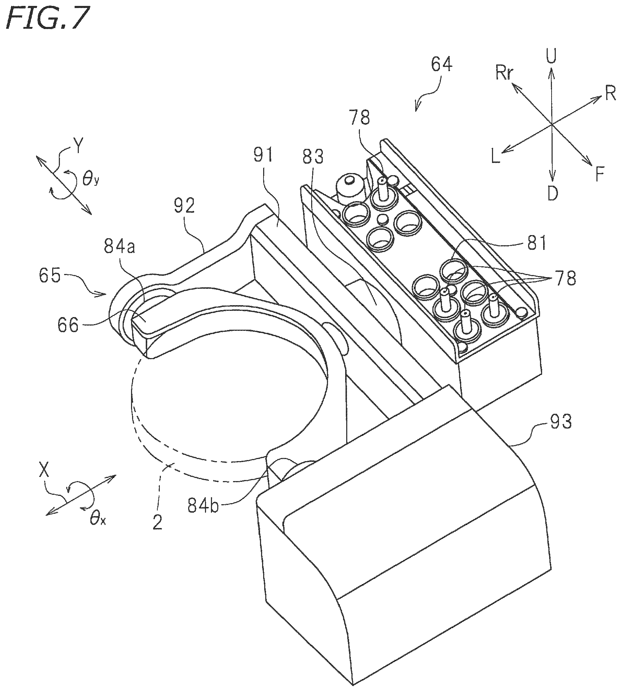

FIG. 4 is a perspective view of an example of the workpiece material 2. The workpiece material 2 is typically larger in outer dimensions than the denture base 20 to be fabricated. In this example, the workpiece material 2 has a disk shape (i.e., a circular plate shape). Alternatively, the workpiece material 2 may have any other suitable shape in accordance with, for example, the shape of the denture base 20 to be fabricated. The workpiece material 2 may have, for example, a block shape or a rod shape instead of a disk shape. The lateral surface of the workpiece material 2 is provided with a step 2s. In a plan view, the step 2s has an approximate C-shape conforming to the shape of a clamp 66. The step 2s may have any suitable shape and size in accordance with, for example, the shape of the clamp 66. The lateral surface of the workpiece material 2 may be provided with any suitable number of steps 2s in accordance with, for example, the shape of the clamp 66. In an alternative example, the lateral surface of the workpiece material 2 may be provided with two or more steps 2s arranged in a dotted manner (or in a non-continuous manner) . The workpiece material 2 is attachable to the cutting apparatus 60 on an as-is basis. The workpiece material 2 includes a cutting target portion 2c to be cut by the cutting apparatus 60, and a retained portion 2h to be retained by the clamp 66 (see FIG. 7) of the cutting apparatus 60 during cutting. The retained portion 2h is typically provided on an outer edge of the cutting target portion 2c. In this example, the retained portion 2h is a lateral surface portion of the workpiece material 2 (i.e., a portion of the workpiece material 2 including the step 2s and its peripheral regions) . The retained portion 2h is retained by the clamp 66 not only during cutting but also after cutting.

The workpiece material 2 may be fabricated by following, for example, a procedure described below. First, thermoplastic resin for partial dentures, such as one described above, is heated to a temperature higher than its melting point and molten in a high temperature melting furnace. The thermoplastic resin heated and molten is poured into a mold having a desired shape and then cooled such that the thermoplastic resin is solidified. The thermoplastic resin solidified is subsequently removed from the mold. The workpiece material 2 is thus molded into a desired shape so as to prepare the workpiece material 2 to be suitably machined by the cutting apparatus 60.

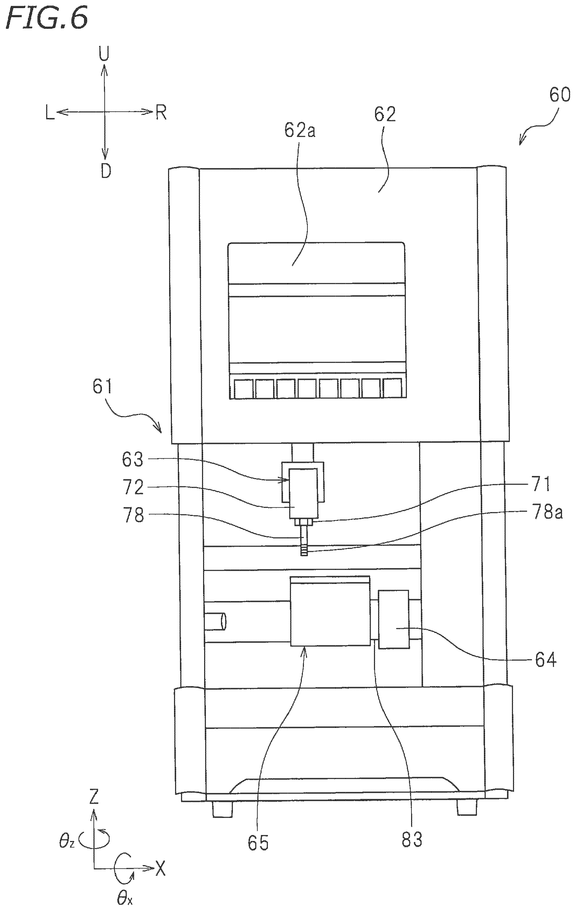

The apparatus preparing step S14 involves preparing the cutting apparatus 60. FIG. 5 is a perspective view of the cutting apparatus 60. FIG. 6 is a front view of the cutting apparatus 60, with its cover 62 opened. FIG. 7 is a perspective view of a tool magazine 64, a rotative support 65, and the clamp 66. In the following description of the cutting apparatus 60, the terms "right", "left", "up", and "down" respectively refer to right, left, up, and down with respect to a dental technician (or operator) in front of the cutting apparatus 60. In the following description of the cutting apparatus 60, the term "forward" refers to a direction away from the rear of the cutting apparatus 60 and toward the dental technician, and the term "rearward" refers to a direction away from the dental technician and toward the rear of the cutting apparatus 60. Assuming that an X axis, a Y axis, and a Z axis are perpendicular to each other, the cutting apparatus 60 is disposed on a plane defined by the X axis and the Y axis. The X axis extends in a right-left direction. The Y axis extends in a front-rear direction. The Z axis extends in an up-down direction. The reference sign θx denotes the direction of rotation around the X axis. The reference sign θy denotes the direction of rotation around the Y axis. The reference sign θz denotes the direction of rotation around the Z axis. These directions and axes are defined merely for the sake of convenience of description and do not limit in any way how the cutting apparatus 60 may be installed.

The cutting apparatus 60 includes a case body 61, the cover 62, a spindle 63, the tool magazine 64, the rotative support 65, and the clamp 66. The case body 61 has a box shape. The case body 61 includes an inner space in which the workpiece material 2 is to be cut. The front portion of the case body 61 is provided with an opening. The cover 62 moves along the front end of the case body 61 in the up-down direction. The opening of the case body 61 is thus openable and closable. Upward movement of the cover 62 brings the inner space of the case body 61 into communication with an outside space. In the present embodiment, the cover 62 is provided with a window 62a. This enables the dental technician to visually recognize the inner space through the window 62a during cutting.

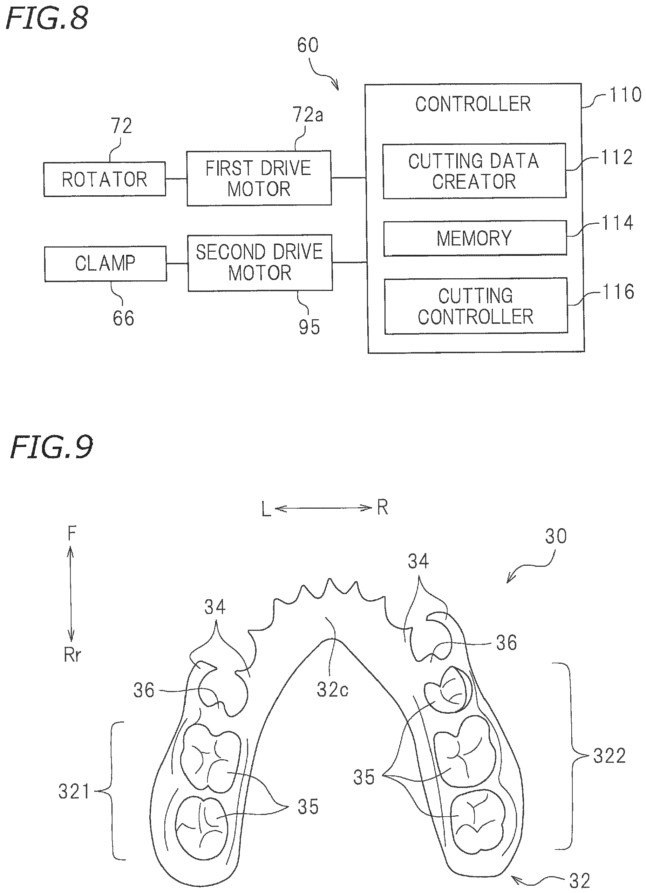

The spindle 63 cuts the workpiece material 2 by rotating a machining tool 78. The spindle 63 and the machining tool 78 serve as an example of a "cutter" . The spindle 63 includes a tool gripper 71 and a rotator 72. The tool gripper 71 grips the upper end of the machining tool 78. In the present embodiment, the rotator 72 is provided on the upper end of the tool gripper 71. The rotator 72 rotates the machining tool 78 gripped by the tool gripper 71. The rotator 72 extends in the up-down direction. The rotator 72 is connected with a first drive motor 72a (see FIG. 8). Driving the first drive motor 72a enables the rotator 72 to rotate in the direction of rotation θz around the Z axis. In response to the rotation of the rotator 72, the machining tool 78 gripped by the tool gripper 71 rotates in the direction of rotation θz around the Z axis. The rotator 72 is movable in the right-left direction and the up-down direction by a first driver (not illustrated).

The tool magazine 64 is able to hold two or more machining tools 78. The tool magazine 64 has a box shape. The upper surface of the tool magazine 64 is provided with a plurality of holes 81 to hold the machining tools 78. Each machining tool 78 is inserted into an associated one of the holes 81 such that the upper portion of each machining tool 78 is exposed. Replacement of the machining tool 78 involves returning the machining tool 78, gripped by the tool gripper 71, to the associated hole 81. Replacement of the machining tool 78 then involves moving the spindle 63 to a position over the machining tool 78 to be used next, and causing the tool gripper 71 to grip the upper end of the machining tool 78 located under the tool gripper 71. The tool magazine 64 is provided with a first rotation shaft 83. The first rotation shaft 83 supports the rotative support 65 such that the rotative support 65 is rotatable. The first rotation shaft 83 extends in the right-left direction. The first rotation shaft 83 is coupled to the rotative support 65. Although not illustrated, the tool magazine 64 is further provided with a second driver. The first rotation shaft 83 is rotatable in the direction of rotation θx around the X axis by the second driver. The rotation of the first rotation shaft 83 in the direction of rotation θx around the X axis causes the rotative support 65 to rotate in the direction of rotation θx around the X axis.

The rotative support 65 supports the clamp 66 such that the clamp 66 is rotatable. In a plan view, the rotative support 65 has an approximate C-shape. The rotative support 65 is coupled to the first rotation shaft 83. The rotative support 65 includes a first portion 91, a second portion 92, and a third portion 93. The first portion 91 extends in the front-rear direction. The second portion 92 extends leftward from the rear end of the first portion 91. The third portion 93 extends leftward from the front end of the first portion 91. The clamp 66 is rotatably supported by the second portion 92 and the third portion 93. In the present embodiment, the cutting apparatus 60 includes a second rotation shaft 84a and a third rotation shaft 84b. A first end of the second rotation shaft 84a is connected to the clamp 66. A second end of the second rotation shaft 84a is connected to the second portion 92. A first end of the third rotation shaft 84b is connected to the clamp 66. A second end of the third rotation shaft 84b is connected to the third portion 93. The third portion 93 is connected with a second drive motor 95 (see FIG. 8) to rotate the clamp 66 in the direction of rotation θy around the Y axis.

The clamp 66 retains the workpiece material 2 when the cutting apparatus 60 cuts the workpiece material 2. The clamp 66 is an example of a "retainer" . In the plan view, the clamp 66 has an approximate C-shape. The clamp 66 may directly retain the workpiece material 2. In one example, the clamp 66 may include a protrusion (not illustrated) conforming to the shape of the step 2s of the workpiece material 2. In this case, the clamp 66 may clamp the workpiece material 2 in the front-rear direction or the up-down direction, with the step 2s of the workpiece material 2 fitted to the protrusion.

FIG. 8 is a block diagram of the cutting apparatus 60. The cutting apparatus 60 includes a controller 110. The controller 110 controls operations of the cutting apparatus 60 to cut the workpiece material 2. In one example, the controller 110 is a microcomputer. Some of the functions of the controller 110 may be implemented by a general-purpose computer, such as a personal computer. In the present embodiment, the controller 110 is provided outside the case body 61. Alternatively, a portion or an entirety of the controller 110 may be provided inside the case body 61. In one example, the controller 110 may include: a central processing unit (CPU) to execute a command of a control program; a read-only memory (ROM) storing, for example, the program to be executed by the CPU; a random-access memory (RAM) to be used as a working area where the program is to be expanded; and a storage medium, such as a memory, storing various types of data.

In the present embodiment, the controller 110 uses a program, stored in a ROM of a microcomputer, so as to control the operations of the cutting apparatus 60 to cut the workpiece material 2. The program may be stored in a storage medium, such as a compact disc (CD) or a digital versatile disc (DVD), for example. In this case, the controller 110 may read the program from the storage medium. Alternatively, the program may be downloaded through the Internet or an intranet.

The controller 110 is electrically connected to the first drive motor 72a and the second drive motor 95. The controller 110 controls driving of the first drive motor 72a so as to control the rotation of the rotator 72 of the spindle 63. Although not illustrated, the controller 110 is able to effect control so as to move the rotator 72 in the right-left direction and the up-down direction. The controller 110 controls driving of the second drive motor 95 so as to control the rotation of the clamp 66 in the direction of rotation θy around the Y axis. Although not illustrated, the controller 110 is able to effect control so as to rotate the first rotation shaft 83 in the direction of rotation θx around the X axis.

The controller 110 includes a cutting data creator 112, a memory 114, and a cutting controller 116. The controller 110 may include circuit(s) In this case, the cutting data creator 112, the memory 114, and the cutting controller 116 may be respectively replaced with a cutting data creating circuit 112, a memory circuit 114, and a cutting control circuit 116.

The cutting data creator 112 creates cutting data. The cutting data is "numerical control (NC) data". The cutting data will be discussed in connection with the cutting data creating step S20 (which will be described below) . The memory 114 stores data, such as the cutting data created by the cutting data creator 112. The cutting controller 116 controls cutting operations of the cutting apparatus 60 in accordance with the cutting data stored in the memory 114. In the present embodiment, the cutting controller 116 controls operations of the spindle 63 and the clamp 66 in accordance with coordinate values included in the cutting data. The cutting controller 116 exercises overall control over the operations of the spindle 63 and the operations of the clamp 66. The cutting apparatus 60 is thus able to three-dimensionally change the relative positions of the machining tool 78 and the workpiece material 2 retained by the clamp 66. Consequently, the cutting apparatus 60 is able to effect high-precision cutting by exercising five-axis control that involves controlling the movement of the spindle 63 along the X axis, the Y axis, and the Z axis and the rotation of the clamp 66 in the direction of rotation θx around the X axis and the direction of rotation θy around the Y axis. In the present embodiment, the cutting apparatus 60 is configured to cut the workpiece material 2 by bringing a cutting edge 78a (see FIG. 6) of the machining tool 78 rotated by the spindle 63 into contact with the workpiece material 2 retained by the clamp 66.

The cutting data creating step S20 involves preparing the cutting data. Specifically, the cutting data creating step S20 first involves preparing standard triangulated language (STL) data for the denture base 20. In one example, a dental technician or a dentist, for example, scans the oral cavity of a patient with an intraoral scanner so as to obtain scan data indicative of the shapes of remaining tooth or teeth and alveolar ridge mucosa of a missing tooth region. In accordance with the scan data, the dental technician, for example, creates three-dimensional STL data using a computer-aided design (CAD) device. In one example, the dental technician creates STL data indicative of the denture base 20 conforming to the shape of the alveolar ridge mucosa of the missing tooth region such that the denture base 20 covers the alveolar ridge mucosa. In the present embodiment, the STL data indicative of the denture base 20 includes STL data indicative of the recessed grooves 15h. The dental technician creates the STL data indicative of the recessed grooves 15h which are to be provided in the missing tooth region and into which ends of the artificial teeth 15 are to be fitted.

In the present embodiment, the dental technician creates STL data indicative of the fitted portions 24. The fitted portions 24 are integral with the denture base 20, covering the alveolar ridge mucosa of the missing tooth region, and extend along the outer edges of the abutment teeth A1 and A2. The STL data indicative of the fitted portions 24 may be created based on the findings known in the art (e.g. , the shapes of denture base regions of non-clasp dentures fabricated by methods known in the art). In one example, the dental technician creates STL data indicative of the fitted portions 24 each adjacent to associated one(s) of the abutment teeth A1 and A2 located forward and rearward of the recessed grooves 15h. In another example, the dental technician creates STL data indicative of the fitted portions 24 each extending along the neck(s) of associated one(s) of the abutment teeth A1 and A2 such that the fitted portions 24 each cover one-half or more than one-half of the lateral portion(s) of associated one(s) of the abutment teeth A1 and A2 (e.g., substantially the entire lateral portion(s) of associated one(s) of the abutment teeth A1 and A2). In still another example, the dental technician creates STL data indicative of the fitted portions 24 each facing associated one(s) of the abutment teeth A1 and A2 from the cheek-side and the tongue-side. In this case, the dental technician may create STL data indicative of the front and rear fitted portions 24 (see FIG. 2). The front fitted portion 24 may include: the cheek-side fitted regions 241c and 242c that extend along the cheek-side portions of the associated abutment teeth A1 and A2; and the tongue-side fitted regions 241t and 242t that extend along the tongue-side portions of the associated abutment teeth A1 and A2. The rear fitted portion 24 may include: the cheek-side fitted region 241c that extends along the cheek-side portion of the associated abutment tooth A1; and the tongue-side fitted region 241t that extends along the tongue-side portion of the associated abutment tooth A1.

In the present embodiment, the dental technician creates STL data indicative of the protrusions 26 that are integral with the denture base 20, covering the alveolar ridge mucosa of the missing tooth region, and are to be placed on the abutment teeth A1. In an alternative example, the dental technician creates STL data indicative of the protrusions 26 each of which is to be placed on an associated one of the abutment teeth A1 and A2 located forward and rearward of the recessed grooves 15h. By following this procedure, the dental technician prepares the STL data indicative of the shape of the denture base 20 including the recessed grooves 15h, the fitted portions 24, and the protrusions 26. The STL data indicative of the denture base 20 is usually created for each patient. The dental technician may use commercially available simulated STL data depending on, for example, the application of the denture base 20.

The cutting data creating step S20 then involves creating the cutting data in accordance with the STL data indicative of the denture base 20 including the recessed grooves 15h, the fitted portions 24, and the protrusions 26. The cutting data indicates a procedure by which the cutting apparatus 60 fabricates the denture base 20. The cutting data includes records of machining steps defining, using coordinate values, operations of the spindle 63 that grips the machining tool 78 and operations of the clamp 66 that retains the workpiece material 2. In one example, the cutting data may be created using a computer-aided manufacturing (CAM) device communicably connected to a CAD device. Although not illustrated, the CAM device is communicably connected to the controller 110. The cutting data created using the CAM device is thus stored in the memory 114 of the controller 110.

The next step is the cutting step S30. The cutting step S30 first involves attaching the workpiece material 2, prepared in the workpiece material preparing step S12, to the clamp 66 of the cutting apparatus 60. In one example, the clamp 66 retains the retained portion 2h of the workpiece material 2. The controller 110 then controls operations of the spindle 63 and the clamp 66 of the cutting apparatus 60 in accordance with the cutting data stored in the memory 114. The cutting apparatus 60 thus cuts the cutting target portion 2c of the workpiece material 2. The cutting apparatus 60 cuts the cutting target portion 2c into the shape of the denture base 20 including the recessed grooves 15h, the fitted portions 24, and the protrusions 26. During the time between the start and end of the cutting process, a change of state from a liquid to a solid does not occur in the workpiece material 2. The cutting target portion 2c is typically connected to the retained portion 2h not only during cutting but also after cutting.

The cutting step S30 then involves detaching the workpiece material 2 from the clamp 66 and removing the workpiece material 2 from the cutting apparatus 60. The cutting step S30 subsequently involves separating the denture base 20 from the retained portion 2h of the workpiece material 2 using a tool, such as a cutter with an edge, for example. The cutting step S30 then involves finishing the denture base 20 separated from the workpiece material 2. This finishing process includes a polishing process for polishing the surface of the denture base 20 using a file, for example. Performing such a finishing process makes the surface of the denture base 20 smoother. The denture base 20 fabricated by cutting the workpiece material 2 has no "burr" on its surface unlike denture bases fabricated by methods known in the art that involve pouring heated and molten thermoplastic resin into plaster molds. Because the finishing process is not essential, the finishing process may be skipped in other embodiments. The present embodiment involves sequentially performing the above-described steps so as to fabricate the denture base 20 integrally including the recessed grooves 15h, the fitted portions 24, and the protrusions 26.

The next step is the artificial tooth attaching step S40. The artificial tooth attaching step S40 involves fitting the ends of the artificial teeth 15 into the recessed grooves 15h so as to secure the artificial teeth 15 to the denture base 20. In one example, the artificial teeth 15 may be more firmly secured to the denture base 20 using a binder, such as an adhesive. The artificial teeth 15 are not limited to any particular type of teeth. Examples of constituent materials of the artificial teeth 15 may include: resin materials, such as polymethyl methacrylate (PMMA) resin, polyether ether ketone (PEEK) resin, and hybrid resin; and inorganic materials, such as zirconia, glass ceramics, and glass fiber. The artificial teeth 15 may be similar to those used for non-clasp dentures known in the art. Material(s) for the artificial teeth 15 may be similar to material (s) for the denture base 20. Specifically, the cutting data creating step S20 may involve creating the cutting data in accordance with three-dimensional data indicative of the shapes of the artificial teeth 15 and the denture base 20, and the cutting step S30 may involve fabricating the artificial teeth 15 and the denture base 20 such that the artificial teeth 15 are integral with the denture base 20. The partial denture manufacturing method in this case may skip the artificial tooth attaching step S40. The present embodiment involves sequentially performing the above-described steps so as to fabricate the partial denture 10.

As described above, the present embodiment involves cutting the workpiece material 2 using the cutting apparatus 60 so as to fabricate the denture base 20 including the fitted portions 24. Accordingly, the time required for the fabrication of the denture base 20 is considerably shorter than when the denture base 20 is fabricated by a method known in the art. This facilitates the fabrication of the denture base 20, resulting in not only a reduction in fabrication cost but also a reduction in the burden on the dental technician. During the cutting step S30, thermoplastic resin remains in a solid state, so that a change of state from a liquid to a solid does not occur. Distortion of thermoplastic resin is thus relatively smaller than when the denture base 20 is fabricated by a method known in the art. The fitted portions 24 fabricated using the cutting apparatus 60 are more consistent with the cutting data than when the fitted portions 24 are fabricated using a three-dimensional printer, for example. Consequently, the manufacturing method described above enables fabrication of the denture base 20 of high precision. The present embodiment eliminates the need for any injection molding machine. This makes it unnecessary to ask a professional dental technician' s workshop to fabricate the denture base 20 when the denture base 20 is fabricated using, for example, the workpiece material 2 prepared in advance. The manufacturing method according to the present embodiment thus more speedily provides partial dentures to patients.

In the present embodiment, the thermoplastic resin, which is the principal component of the workpiece material 2, includes at least one of polyamide resin and polycarbonate resin. Polyamide resin is more elastic and flexible than other types of resin. Polycarbonate resin is mechanically stronger and more shock resistant than other types of resin. Using at least one of polyamide resin and polycarbonate resin makes it possible to manufacture the denture base 20 higher in durability.

In the present embodiment, the denture base 20 includes the protrusions 26 to be disposed on the crowns of the abutment teeth A1. Providing the protrusions 26 more successfully prevents the denture base 20 from sinking toward the alveolar ridge during occlusion. In other words, providing the protrusions 26 enhances the supporting function of the denture base 20 and thus more successfully prevents the denture base 20 from being displaced in the oral cavity of the patient.

In the present embodiment, the denture base 20 includes the recessed grooves 15h to which the artificial teeth 15 are to be secured. This makes it difficult for each artificial tooth 15 to deviate from its desired position and orientation when the artificial teeth 15 are secured to the denture base 20. Consequently, the present embodiment reduces the burden on the dental technician and enables the patient to wear and use the resulting partial denture 10 more comfortably.

In the present embodiment, the front fitted portion 24 includes: the cheek-side fitted regions 241c and 242c that extend along the cheek-side portions of the associated abutment teeth A1 and A2; and the tongue-side fitted regions 241t and 242t that extend along the tongue-side portions of the associated abutment teeth A1 and A2. The rear fitted portion 24 includes: the cheek-side fitted region 241c that extends along the cheek-side portion of the associated abutment tooth A1; and the tongue-side fitted region 241t that extends along the tongue-side portion of the associated abutment tooth A1. Providing the fitted portions 24 enhances at least one of the gripping function and maintaining function of the denture base 20. This more successfully prevents the denture base 20 from being displaced in the oral cavity of the patient.

In the present embodiment, the workpiece material 2 includes the retained portion 2h to be retained by the cutting apparatus 60, and the cutting target portion 2c to be cut into the denture base 20 by the cutting apparatus 60. The retained portion 2h will not be cut by the cutting apparatus 60 and will thus maintain its shape after the workpiece material 2 is cut. When the workpiece material 2 includes the retained portion 2h that is to be suitably retained by the cutting apparatus 60, the workpiece material 2 is easily attachable to the cutting apparatus 60. This enables the cutting apparatus 60 to cut the workpiece material 2 in a stable manner.

Although the embodiment and examples of the present invention have been described in detail thus far, the embodiment and examples described above are only illustrative. The invention disclosed herein includes various changes and modifications made to the specific examples described above.

The manufacturing method described above is intended for the denture base 20 of the partial denture 10 to be worn by a patient with a few or several missing teeth, such as one illustrated in FIGS. 1 and 2. The manufacturing method disclosed herein is not limited to the fabrication of the denture base 20. The manufacturing method disclosed herein enables fabrication of various denture bases for partial dentures. FIG. 9 is a plan view of a partial denture 30 according to another embodiment of the present invention. The partial denture 30 is used for the lower jaw of a patient with many missing teeth. The partial denture 30 has an approximate U-shape in the plan view. The partial denture 30 includes a denture base 32 and artificial teeth 35. The denture base 32 is fabricated by cutting the workpiece material 2. The artificial teeth 35 are secured to the denture base 32. The denture base 32 includes a first base 321 and a second base 322. The first base 321 is located in the lower left portion of FIG. 9. The second base 322 is located in the lower right portion of FIG. 9. The first base 321 and the second base 322 are connected to each other through a connector 32c. The connector 32c extends along the inside surfaces of the front teeth of the patient such that the connector 32c is continuous with the first base 321 and the second base 322. The connector 32c is fitted to the front teeth of the patient. The connector 32c has a strip shape that extends along the tongue-side portions of the front teeth. The tongue-side portions of the front teeth are located in the upper portion of FIG. 9. The first and second bases 321 and 322 include securers (not illustrated), fitted portions 34, and protrusions 36. The artificial teeth 35 are disposed in the securers. The fitted portions 34 are each provided in the form of a clasp. The protrusions 36 are each provided in the form of a rest. When the workpiece material 2 is cut into the denture base 32, the cutting data creating step S20 preferably involves creating cutting data in accordance with three-dimensional data indicative of the shape of the denture base 32 including the connector 32c, the securers, the fitted portions 34, and the protrusions 36. This enables the cutting step S30 to fabricate the denture base 32 integral with the connector 32c, the securers, the fitted portions 34, and the protrusions 36.

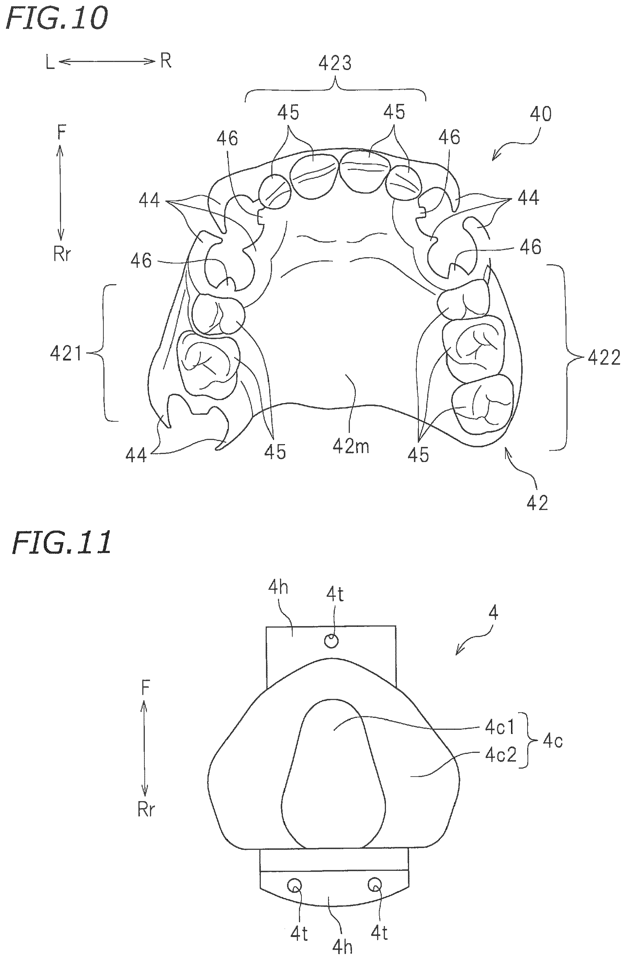

FIG. 10 is a plan view of a partial denture 40 according to still another embodiment of the present invention. The partial denture 40 is used for the upper jaw of a patient with many missing teeth. The partial denture 40 has an approximately semicircular shape in the plan view. The partial denture 40 includes a denture base 42 and artificial teeth 45. The denture base 42 is fabricated by cutting the workpiece material 2. The artificial teeth 45 are secured to the denture base 42. The denture base 42 includes a first base 421, a second base 422, a third base 423, and a palate cover 42m. The first base 421 is located in the lower left portion of FIG. 10. The second base 422 is located in the lower right portion of FIG. 10. The third base 423 is located in the upper central portion of FIG. 10. The first, second, and third bases 421, 422, and 423 include securers (not illustrated), fitted portions 44, and protrusions 46. The artificial teeth 45 are disposed in the securers . The fitted portions 44 are each provided in the form of a clasp. The protrusions 46 are each provided in the form of a rest. When the workpiece material 2 is cut into the denture base 42, the cutting data creating step S20 preferably involves creating cutting data in accordance with three-dimensional data indicative of the shape of the denture base 42 including the palate cover 42m, the securers, the fitted portions 44, and the protrusions 46. This enables the cutting step S30 to fabricate the denture base 42 integral with the palate cover 42m, the securers, the fitted portions 44, and the protrusions 46.

The application of the denture base 20 is not limited to fabrication of partial dentures. The denture base 20 may be used for dental appliances to be temporarily worn by a patient. Examples of such dental appliances include a dental base plate, a surgical guide for use in burial of an implant, a temporary tooth temporarily worn after extraction, and an orthodontic appliance such as a mouthpiece. The partial denture 10 and/or the denture base 20 may be used as model(s) for educational purposes, for example, instead of being worn by a patient.

The manufacturing method described above involves using the circular plate workpiece material 2 so as to fabricate the denture base 20. The workpiece material 2, however, is not limited to a circular plate shape. For example, suppose that the circular plate workpiece material 2 is cut into the denture base 42 for use in the partial denture 40 illustrated in FIG. 10. In this case, a portion of the workpiece material 2 where the palate cover 42m is to be formed needs to be cut more deeply than portions of the workpiece material 2 where the first to third bases 421 to 423 are to be formed. Shavings created by cutting the workpiece material 2 are typically discarded without being recycled. Accordingly, a workpiece material highly similar in shape to the denture base 42 is preferably used from the viewpoint of reducing the amount of waste and cost of disposal.

FIG. 11 is a plan view of a workpiece material 4. The workpiece material 4 includes two retained portions 4h and a cutting target portion 4c. The two retained portions 4h are provided on the outer edge of the cutting target portion 4c. One of the retained portions 4h is located forward of the cutting target portion 4c. The other retained portion 4h is located rearward of the cutting target portion 4c. The front and rear retained portions 4h face each other, with the cutting target portion 4c located therebetween. The retained portions 4h are provided with a plurality of through holes 4t. The cutting target portion 4c has an approximately semicircular shape in the plan view. The cutting target portion 4c includes a palate-conforming region 4c1 and a base-forming region 4c2. The palate-conforming region 4c1 conforms to the palate of a patient. The base-forming region 4c2 is a region of the cutting target portion 4c other than the palate-conforming region 4c1. In one example, the palate-conforming region 4c1 is a region of the cutting target portion 4c where the palate cover 42m illustrated in FIG. 10 is to be formed. The base-forming region 4c2 is provided around the outer edge of the palate-conforming region 4c1. The base-forming region 4c2 has an approximate U-shape in the plan view. The base-forming region 4c2 conforms to remaining teeth and alveolar ridge mucosa of a missing tooth region. In one example, the base-forming region 4c2 is a region of the cutting target portion 4c where the first to third bases 421 to 423 illustrated in FIG. 10 are to be formed. The workpiece material 4 is provided such that the palate-conforming region 4c1 is relatively thinner than the base-forming region 4c2. In other words, the amount of thermoplastic resin used for the palate-conforming region 4c1 per unit area is smaller than the amount of thermoplastic resin used for the base-forming region 4c2 per unit area. Accordingly, when the workpiece material 4 is used, the cutting efficiency for the palate cover 42m is higher than when the circular plate workpiece material 2, for example, is used. The use of the workpiece material 4 reduces the amount of waste.

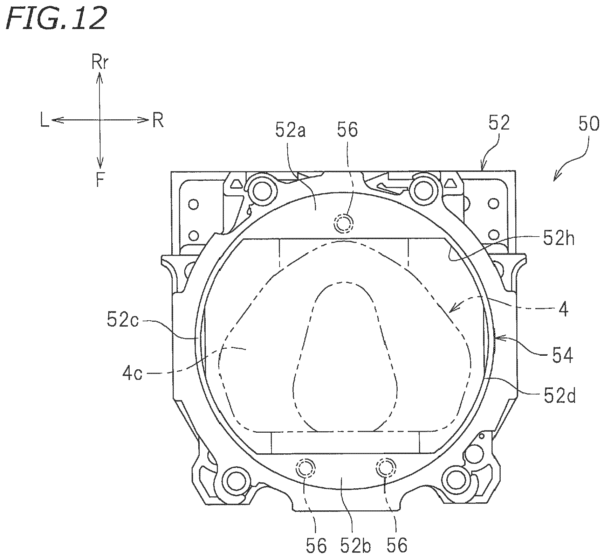

The cutting step S30 of the manufacturing method described above involves causing the clamp 66 to directly retain the workpiece material 2. Alternatively, the clamp 66 may indirectly retain the workpiece material 2. FIG. 12 is a plan view of an adapter 50. The adapter 50 retains the workpiece material 4. The adapter 50 conforms in shape to the clamp 66. The adapter 50 is attached to the clamp 66. The adapter 50 includes a body 52 and a retaining plate 54 detachably attached to the body 52. The workpiece material 4 is interposed between the body 52 and the retaining plate 54. The retaining plate 54 has an approximate O-shape in the plan view. The body 52 includes a first portion 52a, a second portion 52b, a third portion 52c, and a fourth portion 52d. The front retained portion 4h of the workpiece material 4 is fitted to the first portion 52a. The rear retained portion 4h of the workpiece material 4 is fitted to the second portion 52b. The third portion 52c connects a first end of the first portion 52a to a first end of the second portion 52b. The fourth portion 52d connects a second end of the first portion 52a to a second end of the second portion 52b. A portion of the body 52 surrounded by the first to fourth portions 52a to 52d defines an opening 52h. The cutting target portion 4c of the workpiece material 4 is disposed in the opening 52h. The first and second portions 52a and 52b are provided with threaded holes 56. In the plan view, the locations of the through holes 4t of the workpiece material 4 correspond to the locations of the threaded holes 56. With the workpiece material 4 disposed in the adapter 50, screws are inserted into the threaded holes 56 so as to fasten the body 52 and the retaining plate 54 to each other. This secures the workpiece material 4 to the adapter 50.

When the cutting step S30 involves using the adapter 50, the workpiece material 4 may first be attached to the adapter 50, and the adapter 50 to which the workpiece material 4 is attached may then be retained by the clamp 66. The use of the adapter 50 makes it possible to selectively use the workpiece material 4 of suitable shape and size in accordance with, for example, the shape of the denture base 42 to be fabricated. The denture base 42 is thus fabricated with efficiency. The efficient fabrication of the denture base 42 results in not only a reduction in the amount of waste but also a reduction in the time required for cutting.

The manufacturing method described above involves using the cutting apparatus 60 including the clamp 66 serving as the retainer. Alternatively, the cutting apparatus 60 may include, instead of the clamp 66, any other suitable retainer. For example, suppose that a workpiece material has a substantially cuboid shape. In this case, a surface of the workpiece material may be provided with a cut-out, and a pin may be inserted into and secured to the cut-out so as to retain the workpiece material. In one example, the clamp 66 may be detached from the cutting apparatus 60, and the pin may be rotatably attached to the first rotation shaft 83. Such a retainer may be suitably used similarly to the clamp 66.

## Claims

1. A denture base manufacturing method, comprising:
an apparatus preparing step (S10) involving preparing a cutting apparatus (60), including:
a retainer (66) to retain a workpiece material (2, 4) composed mainly of thermoplastic resin,
a cutter (63, 78) to cut the workpiece material (2, 4), and
a controller (110) communicably connected to the retainer (66) and the cutter (63, 78);
a cutting data creating step (S20) involving creating cutting data in accordance with three-dimensional data indicative of a shape of a denture base (20, 32, 42) including a fitted portion (24, 34, 44) to be fitted to an abutment tooth (A1, A2) of a patient; and
a cutting step (S30) involving cutting the workpiece material (2, 4) using the cutting apparatus (60) in accordance with the cutting data.

2. The manufacturing method according to claim 1, wherein
the thermoplastic resin includes at least one of polyamide resin and polycarbonate resin.

3. The manufacturing method according to claim 1 or 2, wherein
the denture base (20, 32, 42) further includes a protrusion (26, 36, 46) to be disposed on a crown of the abutment tooth (A1, A2) .

4. The manufacturing method according to any one of claims 1 to 3, wherein
the denture base (20, 32, 42) further includes a securer (15h) to secure an artificial tooth (15, 35, 45).

5. The manufacturing method according to any one of claims 1 to 4, wherein
the fitted portion (24) includes
a cheek-side fitted region (241c, 242c) that extends along a cheek-side portion of the abutment tooth (A1, A2), and
a tongue-side fitted region (241t, 242t) that extends along a tongue-side portion of the abutment tooth (A1, A2).

6. The manufacturing method according to any one of claims 1 to 5, wherein
the cutting step (S30) involves attaching the workpiece material (4) to an adapter (50), and causing the retainer (66) to retain the adapter (50) to which the workpiece material (4) is attached.

7. A cutting apparatus (60), comprising:
a retainer (66) to retain a workpiece material (2, 4) composed mainly of thermoplastic resin;
a cutter (63, 78) to cut the workpiece material (2, 4) ; and
a controller (110) communicably connected to the retainer (66) and the cutter (63, 78), wherein
the controller (110) includes
a cutting data creator (112) to create cutting data in accordance with three-dimensional data indicative of a shape of a denture base (20, 32, 42) including a fitted portion (24, 34, 44) to be fitted to an abutment tooth (A1, A2) of a patient, and
a cutting controller (116) to cut the workpiece material (2, 4) in accordance with the cutting data.

8. A workpiece material (2, 4) composed mainly of thermoplastic resin, wherein
the workpiece material (2, 4) is to be cut into a denture base (20, 32, 42) by a cutting apparatus (60), the denture base (20, 32, 42) including a fitted portion (24, 34, 44) to be fitted to an abutment tooth (A1, A2) of a patient.

9. The workpiece material (2, 4) according to claim 8, wherein
the thermoplastic resin includes at least one of polyamide resin and polycarbonate resin.

10. The workpiece material (2, 4) according to claim 8 or 9, comprising:
a retained portion (2h, 4h) to be retained by the cutting apparatus (60); and
a cutting target portion (2c, 4c) to be cut into the denture base (20, 32, 42) by the cutting apparatus (60).
